Europäisches Patentamt

European Patent Office

Office européen des brevets

(11) Publication number: 0 492 436 A2

# EUROPEAN PATENT APPLICATION

(21) Application number: 91121784.2

(22) Date of filing: 19.12.91

(51) Int. Cl.5: D01F 11/12

(30) Priority: 21.12.90 US 633410

(43) Date of publication of application:
01.07.92 Bulletin 92/27

(84) Designated Contracting States:
DE FR MC

(71) Applicant: UCAR CARBON TECHNOLOGY
CORP.
39 Old Ridgebury Road
Danbury, Connecticut 06817-0001(US)

(72) Inventor: Sara, Raymond Vincent
22146 Meadownorth Court
Strongsville, Ohio 44136(US)

(74) Representative: Eggert, Hans-Gunther, Dr.
Räderscheidtstrasse 1
W-5000 Köln 41(DE)

(54) Silicon carbide coating process.

(57) A method for forming a silicon carbide coating on a carbonaceous substrate or a dual coating in a single reaction with an inner base coating of silicon carbide and an outer coating of a monocarbide. The substrate is immersed in a molten bath of silicon metal and an acid soluble metal at a critical minimum temperature of at least 1550°C.

FIG. 2

## FIELD OF THE INVENTION

This invention relates to a method of forming a silicon carbide coating on a carbonaceous substrate and to a method of forming a dual refractory metal coating on a carbonaceous substrate in a single reaction with an inner base coating of silicon carbide and an outer coating of a monocarbide.

## BACKGROUND OF THE INVENTION

A need exists for coating complex configurations of carbon or graphite with a single layer of silicon carbide or with a dual coating having a base coating of silicon carbide and an outer coating of a monocarbide. The coating layers protect the carbon or graphite body from hostile environments. This is particularly the case where the object has an intricate geometry or is in the form of a multifilament yarn. In the latter case various conventional line of sight coating methods including sputtering, chemical vapor deposition, gas phase reaction or polymer conversion cannot provide a uniform coating distribution since one fiber of a multifilament yarn tends to act as a screen for other fibers.

Silicon carbide is particularly advantageous as a coating composition for graphite since silicon carbide has a thermal expansion characteristic similar to graphite.

## SUMMARY OF THE INVENTION

It has been discovered that a uniformly distributed and well bonded coating of silicon carbide can be formed on a carbonaceous substrate by the process of the present invention comprising the steps of: immersing the carbonaceous substrate in a molten bath containing silicon metal and an acid soluble metal which does not react with carbon to form a metal carbide, raising the temperature of the bath to at least a minimum reaction temperature of 1550°C, removing the carbonaceous substrate from the bath and dissolving the unreacted acid soluble metal from the surface.

It has further been discovered in accordance with the present invention that a uniformly distributed and well bonded dual coating can be formed on a carbonaceous body with an inner base coating of silicon carbide and outer monocarbide coating comprising the steps of: immersing the carbonaceous substrate in a molten bath containing a silicide which is thermodynamically unstable in the presence of carbon, with said silicide being selected from the group consisting of $T_1S_2$, $ZrSi_2$, $CrSi_2$ and $HfSi_2$ and an acid soluble metal which does not react with carbon to form a metal carbide, raising the temperature of the bath to at least a minimum reaction temperature of 1550°C, removing the carbonaceous substrate from the bath and dissolving the unreacted acid soluble metal from the surface.

## BRIEF DESCRIPTION OF THE DRAWINGS

Figure 1 is a photomicrograph of a test, section of a carbon fiber cloth showing the formation of silicon carbide surrounding the carbon fibers at a magnification of 500X; and

Figure 2 is a composite photomicrograph obtained by electron dispersive X-ray of a carbon fiber cloth showing elemental distributions of C,Si, and Ti.

## DESCRIPTION OF A PREFERRED EMBODIMENT OF THE INVENTION

The subject invention may be used for coating any carbon or graphite body with silicon carbide or for forming a dual coating with a base coat of silicon carbide and an outer monocarbide coating. The carbon or graphite body may be a solid structure or a flexible monofilament or multifilament yarn. One method for forming carbon yarn from a polymeric fibrous material is disclosed in U.S. Patent 3,503,703 issued March 31, 1970.

In accordance with the method of the present invention the carbon or graphite body is treated to deposit a coating of silicon carbide over its surface. This is accomplished by immersing the carbon or graphite body into a melt containing silicon metal and an acid soluble metal which is capable of alloying with the silicon metal but which itself does not react with carbon to form a metal carbide. There is a minimum critical reaction temperature of 1550°C. The preferred melt temperature is 1600°C. Any acid soluble metal which does not react with carbon to form a metal carbide may be used including indium, germanium, gallium, tin, antimony, bismuth, silver, copper and the like. After, cooling, the silicon carbide coated body is immersed in an acidic solution, such as HCl, to dissolve the unreacted acid soluble metal from the surface.

A dual coating may also be formed in accordance with the present invention having a base coat of silicon carbide and a monocarbide outer coating by forming a melt containing a silicide compound which is thermodynamically unstable in the presence of carbon and an acid soluble metal which is capable of alloying with said silicide compound but which does not react with carbon to form a metal carbide, raising the temperature of the melt to a temperature of at least 1550°C, preferably 1600°C, and immersing the carbon or graphite body into the melt. The preferred silicide compound is selected from the group consisting of $TiS_2$, $ZrSi_2$, $CrSi_2$ and $HfSi_2$. The carbon or graphite body is held immersed in the molten bath for a time sufficient to effect reaction of the silicide with the carbon body to form a base layer of silicon carbide and an outer monocarbide coating over the silicon carbide coating in the same reaction. The monocarbide coating is of a metal carbide corresponding to the metal in the silicide compound. Accordingly, when using $TiSi_2$ the monocarbide will be TiC whereas when using $ZrSi_2$ the monocarbide will be ZrC.

The outer monocarbide coating may thereafter be reacted with a boron containing compound under conditions to cause a reaction between the metal in the carbide coating and the boron in the boron containing compound to produce a boride or diboride outer coating as taught and described in a corresponding patent application Serial No. 419331 Filed 10/10/89 the disclosure of which is herein incorporated by reference. The boron containing compound may be, for example, B, $H_3BO_3$, $BPO_4$, $B_2O_3$, $B_4C$, BN, $BCl_3$ and the like. The metal carbide is converted to a metal boride or metal diboride under reaction conditions above a threshold temperature of at least 1200°C but preferably above 1400°C in a nonreactive or essentially inert atmosphere.

The following examples are illustrative of the invention.

Monolithic graphite, multi-filament yarn and woven carbon fiber cloth were coated with SiC by exposing them to molten alloys of In-Si, and Sn-Si at approximately 1550°C for ten minutes in an inert atmosphere.

Example 1: A mixture comprising 2.28 g of 1.6 mm diameter indium wire and 0.12 g -325 mesh silicon powder, 5 weight percent (w/o) of the total mixture, were placed in a 3/4" diameter graphite crucible and heated to 1600C for 30 minutes in an argon atmosphere. The ingredients melted and completely wetted the graphite crucible. Pure molten indium typically does not wet graphite. The crucible was cut in two pieces; one half was dissolved in 50% HCl and the second half was mounted in a metallographic mount, polished and examined by optical microscopy and by scanning electron microscopy (SEM) and by Kevex to determine elemental content. X-ray diffraction of the acid-treated section indicated SiC had formed where wetting occurred. Optical microscopy and SEM indicated the existence of a reaction product containing silicon.

Example 2: A mixture comprising 1.90 g -325 mesh tin powder and 0.10 g -325 mesh silicon powder (5 w/o) were placed in a 3/4" diameter graphite crucible and heated at 1600°C for 30 minutes in an argon atmosphere. The molten alloy completely wetted the graphite crucible. Molten tin does not normally wet the surface of graphite. An analysis of wetted portions of the crucible as described in Example 1 indicated SiC had formed.

Example 3: A mixture comprising 1.90 g -325 mesh tin powder and 0.10 g -325 mesh $ZrSi_2$ powder (5 w/o) were placed in a 3/4" diameter graphite crucible and heated at 1600°C for 30 minutes in an argon atmosphere. The molten alloy completely wetted the crucible. An analysis of wetted portions of the crucible as described in Example 1 indicated the existence of dual reaction layer. The zone nearest the graphite was SiC and ZrC was furthest from the graphite. Some silicon, presumably as SiC, was dispersed in the ZrC layer.

Example 4: A well-blended mixture comprising 94.72 w/o tin, 4.98 w/o silicon and 0.30 w/o amphorous boron was placed on top of carbon cloth and heated for ten minutes at 1500°C in argon. Excellent wetting was obtained and the boron improved the alloy appearance by scaveging oxygen. Studies afterward identified excellent fiber penetration by the melt and good SiC coating uniformity.

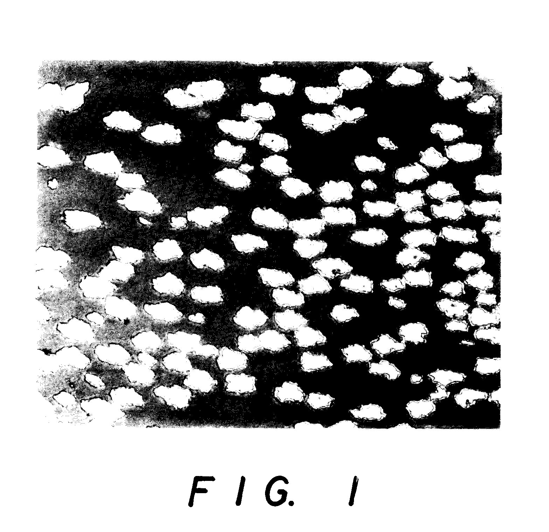

A similar experiment was conducted whereby a slightly different powder mixture of 96.71 w/o indium, 2.99 w/o silicon and 0.30 w/o boron was heated in contact with carbon cloth. Even though less silicon was employed in this example relative to the tin example, wetting and melt penetration into the fiber bundles was excellent. The photomicrograph in Figure 1 illustrates the SiC coating is uniform and approximately 1 um thick.

Maximum fiber strength is retained by precoating the fibers with a sacrificial carbon coating prior to reaction. Such a coating may be applied, for example, by immersing the fibers in molten pitch and carbonizing the pitch or, alternatively, by coating the fibers with pyrolytic carbon.

Example 5: In this example, a blended mixture of 0.97 g tin powder (-325 mesh) and 0.03 g $TiSi_2$ powder (-325 mesh) was placed on top of carbon fiber cloth which was positioned in a small graphite holder. The latter had a cavity measuring 9/16" diameter x 3/16" deep. This assembly was placed in a graphite crucible susceptor and heated inductively in argon to 1500°C for ten minutes.

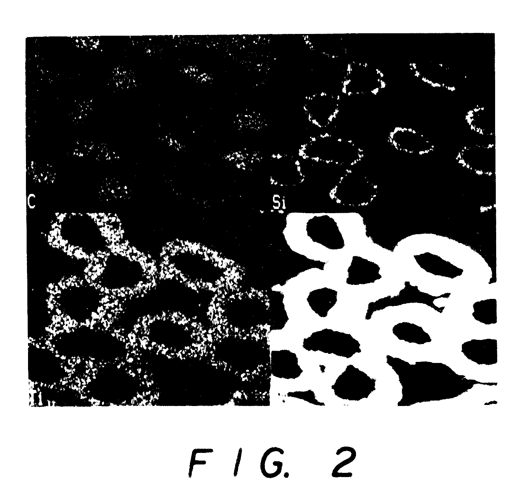

The fibers were completely wetted by the molten alloy which signified formation of interfacial carbides. The tin was removed completely by dissolution in HCl. X-ray diffraction of the coated fibers confirmed the presence of TiC and SiC. The composite photomicrograph in Figure 2 shows elemental distributions for C, Si, and Ti as determined by electron dispersive X-ray (EDX). The lower right projection is an SEM micrograph showing coating features. According to these data, it can be concluded SiC is adjacent to the carbon fibers and TiC is deposited on the SiC.

**Claims**

1. A process for forming a silicon carbide coating on a carbonaceous substrate comprising the steps of:

    forming a molten bath containing silicon metal and an acid soluble metal which does not react with carbon to form a metal carbide;

    immersing the carbonaceous substrate in said molten bath;

    raising the temperature of the bath to at least 1550°C for a time sufficient to effect reaction of the silicon metal with the carbonaceous substrate for forming a silicon carbide coating on said substrate;

    removing the carbonaceous substrate from the bath; and

    dissolving the unreacted acid soluble metal from the surface.

2. A process as defined in claim 1 wherein said acid soluble metal is selected from the group consisting of indium, germanium, gallium, tin, antimony, bismuth, silver, copper and the like.

3. A process as defined in claim 2 wherein said temperature is raised to at least 1600°C.

4. A process as defined in claim 3 wherein said carbonaceous substrate is a flexible multifilament yarn of carbon fibers.

5. A process as defined in claim 4 wherein said carbon fibers are coated with a sacrificial carbon coating.

6. A process for forming a dual refractory metal carbide coating on a carbonaceous substrate consisting of a base coat of silicon carbide and a monocarbide outer coating comprising the steps of:

    forming a molten bath containing a silicide compound which is thermodynamically unstable in the presence of carbon and an acid soluble metal which is capable of alloying with said silicide compound but which does not react with carbon to form a metal carbide;

    raising the temperature of the melt to a temperature of at least 1550°C;

    immersing the carbonaceous substrate in said molten bath for a time sufficient to effect reaction of said silicide compound with said carbonaceous substrate;

    removing the carbonaceous substrate from the bath; and

    dissolving the unreacted acid soluble metal from the surface.

7. A process as defined in claim 6 wherein said silicide compound is selected from the groups consisting of $TiS_2$, $ZrSi_2$, $CrSi_2$ and $HfSi_2$.

8. A process as defined in claim 7 wherein said acid soluble metal is selected from the group consisting of indium, germanium, gallium, tin, antimony, bismuth, silver, copper and the like.

9. A process as defined in claim 8 wherein said temperature is raised to at least 1600°C.

10. A process as defined in claim 8 further comprising the step of reacting said outer monocarbide coating with a boron containing compound to produce an outer boride or diboride coating.

F I G. 1

F I G. 2